Europäisches Patentamt

European Patent Office

Office européen des brevets

(11) Veröffentlichungsnummer: **0 304 629**
**A1**

## (12) EUROPÄISCHE PATENTANMELDUNG

(21) Anmeldenummer: **88111800.4**

(51) Int. Cl.⁴: **H04N 5/64**

(22) Anmeldetag: **22.07.88**

(30) Priorität: **26.08.87 DE 8711568 U**

(43) Veröffentlichungstag der Anmeldung:
**01.03.89 Patentblatt 89/09**

(84) Benannte Vertragsstaaten:
**AT CH DE FR IT LI**

(71) Anmelder: **GRUNDIG E.M.V.**
**Elektro-Mechanische Versuchsanstalt Max**
**Grundig holländ. Stiftung & Co. KG.**
**Kurgartenstrasse 37**
**D-8510 Fürth/Bay.(DE)**

(72) Erfinder: **Rohrbacher, Josef, Dipl.-Ing.**
**c/o GRUNDIG E.M.V. Kurgartenstrasse 37**
**D-8510 Fürth(DE)**
Erfinder: **Gentele, Walter**
**c/o GRUNDIG E.M.V. Kurgartenstrasse 37**
**D-8510 Fürth(DE)**

(54) **Fernsehempfänger.**

(57) Beschrieben ist ein Fernsehempfänger mit zwei seitlich integrierten Lautsprecherboxen, wobei das einzelne Boxengehäuse an die hinten schmäler werdende Bildröhre gegenüber einer schmalen Front-Öffnungsseite erweiternd angepaßt ist. Der in jeder Lautsprecherbox befindliche Lautsprecher ist gegenüber der Schallwand zurückversetzt angeordnet und der Schall wird über eine hornförmige Schallführung in Richtung der Frontseite des Gerätes abgestrahlt.

EP 0 304 629 A1

# FERNSEHEMPFÄNGER

Die Neuerung betrifft einen Fernsehempfänger mit zwei seitlichen, im Empfängergehäuse integrierten Lautsprecherboxen.

Derartige Fernsehempfänger bieten, insbesondere was den Baßbereich anbelangt, aufgrund des geringen Volumens der Lautsprecherboxen und der kleinen Durchmesser der nach vorne abstrahlenden Lautsprechersysteme noch keine befriedigende Tonwiedergabe. Auch Konstruktionen mit größer dimensionierten Lautsprechersystemen, die dann zur Seite hin abstrahlen, stellen keine befriedigende Lösung dar, da sich bei solchen Geräten Nachteile ergeben, wenn sie in einem Schrank oder einer Schrankwand betrieben werden sollen.

Der Neuerung liegt die Aufgabe zugrunde, einen Fernsehempfänger und insbesondere die darin integrierten, nach vorne abstrahlenden Lautsprecherboxen konstruktiv so auszubilden, daß sich, vor allem auch im Baßbereich, Verbesserungen hinsichtlich des Wirkungsgrades ergeben.

Diese Aufgabe wird gemäß der Neuerung durch die im Kennzeichen des Anspruchs 1 angegebenen Merkmale gelöst. Vorteilhafte Ausgestaltungen der Neuerung sind in den Unteransprüchen gekennzeichnet.

Der Fernsehempfänger gemäß der Erfindung enthält zwei integrierte Lautsprecherboxen, deren Volumen durch besonders günstige Raumausnutzung und Formgestaltung innerhalb des Empfängergehäuses größer ist als das von herkömmlichen Konstruktionen. Ferner weisen die Lautsprecherboxen eine besondere Schallführung auf. Hierdurch ergeben sich insgesamt Verbesserungen der Tonwiedergabe.

Ein Ausführungsbeispiel der Neuerung ist im folgenden anhand einer Zeichnung näher erläutert.

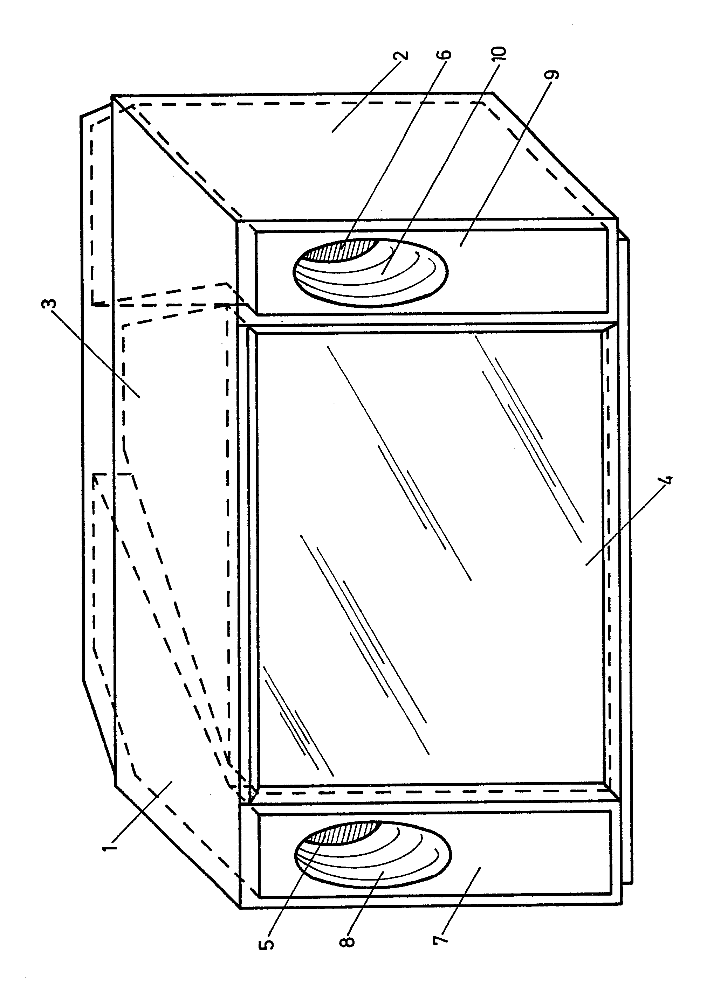

Die Figur zeigt einen Fernsehempfänger mit zwei seitlichen, im Empfängergehäuse integrierten Lautsprecherboxen 1 und 2. Hierbei ist die Form jeder Box gemäß der Neuerung an das nach hinten schmaler werdende Empfängerchassis 3 und/oder an die nach hinten schmaler werdende Bildröhre 4 angepaßt. Das Empfängerchassis 3 und die Bildröhre 4 sind in der Zeichnung nur schematisch angedeutet. Darüberhinaus ist der in jeder Lautsprecherbox betriebene Lautsprecher 5, 6 gegenüber der jeweiligen Schallwand 7, 9 zurückversetzt angeordnet und strahlt den Schall über eine hornförmige Schallführung 8 bzw. 10 ab.

Bei einer bevorzugten Ausführungsform der Neuerung ist die Schallführung 8 bzw. 10 in ihren Abmessungen so dimensioniert, daß die Querschnittsfläche der Öffnung in Richtung Schallwand 7 bzw. 9 exponentiell zunimmt. Bei geeigneter Wahl der Länge der Schallführung, die sich insbesondere nach dem wiederzugebenden Frequenzbereich richtet, kann die Verbesserung der Wirkungsgrades noch optimiert werden.

Als Lautsprecher können neben reinen Baßlautsprechern auch breitbandige Lautsprechersysteme eingesetzt werden.

## Ansprüche

1. Fernsehempfänger mit zwei seitlichen, im Empfängergehäuse integrierten Lautsprecherboxen, **dadurch gekennzeichnet,** daß die Form jeder Lautsprecherbox (1, 2) an das nach hinten schmaler werdende Empfängerchassis (3) und/oder an die nach hinten schmaler werdende Bildröhre (4) angepaßt ist, und daß der in jeder Lautsprecherbox betriebene Lautsprecher (5, 6) **gegenüber** der jeweiligen Schallwand (7, 9) zurückversetzt angeordnet ist und den Schall über eine hornförmige Schallführung (8, 10) abstrahlt.

2. Fernsehempfänger nach Anspruch 1, **dadurch gekennzeichnet,** daß die Querschnittsfläche der hornförmigen Schallführung (8, 10) zur Schallwand (7, 9) hin exponentiell zunimmt.

3. Fernsehempfänger nach Anspruch 1 oder 2, **dadurch gekennzeichnet,** daß als Lautsprecher (5, 6) breitbandige Lautsprechersysteme vorgesehen sind.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP - A1 - 0 154 219 (STANDARD ELECTRIC LORENZ)<br><br>* Fig. 1,2; Seite 3, Zeile 17 - Seite 4, Zeile 6; Anspruch 1 *<br><br>-- | 1 | H 04 N 5/64 |
| Y | DE - A1 - 3 128 462 (STANDARD ELECTRIC LORENZ)<br><br>* Fig. 2 *<br><br>-- | 1 | |
| Y | US - A - 3 086 078 (SHARMA)<br><br>* Fig. 3; Spalte 2, Zeilen 58-63 * | 1 | |
| A | <br>-- | 2 | |
| A | US - A - 4 210 784 (PHILLIPS)<br><br>---- | | |

**RECHERCHIERTE SACHGEBIETE (Int. Cl.4)**

H 04 N 5/00

H 04 B 1/00

H 04 R 5/00

Der vorliegende Recherchenbericht wurde für alle Patentansprüche erstellt.

| Recherchenort | Abschlußdatum der Recherche | Prüfer |
|---|---|---|
| WIEN | 28-11-1988 | BENISCHKA |